# EUROPÄISCHE PATENTSCHRIFT

(11) **EP 0 368 185 B1**
(45) Veröffentlichungstag und Bekanntmachung des Hinweises auf die Patenterteilung: **06.04.1994**
(21) Anmeldenummer: 89120457.0
(22) Anmeldetag: 06.11.1989
(51) Int. Cl.: B29C 51/16

(54) **Tiefziehmaschine**
Deep-drawing machine
Machine d'emboutissage

(30) Priorität: 07.11.1988 DE 3837706
(43) Veröffentlichungstag der Anmeldung: 16.05.1990
(73) Patentinhaber: Hassia Verpackungsmaschinen GmbH, D-63689 Ranstadt (DE)
(72) Erfinder: Walter, Kurt, D-6475 Glauburg 1 (DE)
(74) Vertreter: Wolf, Günter, Dipl.-Ing.

(56) Entgegenhaltungen:
- FR-A- 2 482 558
- FR-A- 2 484 957

## Beschreibung

Die Erfindung betrifft eine Tiefziehmaschine zum Herstellen von becherartigen Behältern aus thermoplastischer Folie mit Einrichtung zum Einbringen eines banderolenförmigen Streifens in die Tiefziehform gemäß Oberbegriff des Hauptanspruches.

Tiefziehmaschinen der genannten Art sind allgemein bekannt, mit denen becherartige Behälter rundum banderoliert werden sollen. Abgesehen von einschlägigen Maschinen mit Tiefziehformen, die in verschiedenen Arbeitsstellungen geschwenkt bzw. gedreht werden können (siehe bspw. DAS 25 17 534), wobei in einer Stellung die vorgeformte Banderole eingelegt und in einer anderen Stellung die becherbildende Folie eingeformt wird, besteht der Stand der Technik, von dem hier ausgegangen ist, im Prinzip darin, mit geeigneten Fördermitteln eine passende Banderolenlänge von einer Vorratsrolle abzuziehen, via Führungsschlitz in die mit einem Einschubschlitz versehene Tiefziehform einzufördern und unmittelbar im Bereich des Einschubschlitzes abzuschneiden (siehe bspw. DOS 23 23 275). Das Abschneiden der Banderole unmittelbar am Einschubschlitz verlangt eine recht aufwendige und schwierige Gestaltung der Tiefziehform selbst und auch des Schneidwerkzeuges. Der Abschnitt der erforderlichen Banderolenlänge in Anpassung an den Umfang des betr. Bechers bzw. der Formeintiefung, in der der Becher ausgeformt werden soll, erfolgt hierbei also erst, wenn der Banderolenstreifen in die Form eingeführt ist. Dies führt zu Ungenauigkeiten. Nach dem gleichen Prinzip wird abgeschnitten bei Maschinen, die solche Ungenauigkeiten vermeiden sollen und bei denen der Banderolenstreifen zunächst auf einen sog. Wickeldorn aufgebracht wird, von dem dann die Übergabe der vorgeformt gewickelten Banderole in die eigentliche Tiefziehform bewerkstelligt werden muß (siehe bspw. DOS 26 04 789 oder DOS 31 19 717). Da hierbei nicht nur der Wickeldorn und die Tiefziehform relativ zueinanderbewegt werden müssen, sondern auch die Tiefziehform relativ zum Durchlauffolienband, aus dem die Becher gebildet werden sollen, ergeben sich hierbei komplexe Bewegungsvorgänge mit entsprechenden Antriebsaufwand, zumal der Wickeldorn auch noch gedreht werden muß.

Der Erfindung liegt demgemäß die Aufgabe zugrunde, ausgehend von einer Tiefziehmaschine der gattungsgemäßen Art, diese dahingehend zu verbessern, daß sich denkbar einfache Bewegungsvorgänge ergeben, die exakte Längenbemessung des einzubringenden Banderolenstreifens schon vor dem Einschub in die Tiefziehform erfolgt, dabei aber trotzdem eine Abdekkung des Gesamtumfanges der Formeintiefung gewährleistet sein soll.

Diese Aufgabe ist mit einer Tiefziehmaschine der gattungsgemäßen Art nach der Erfindung durch die im Kennzeichen des Hauptanspruches angeführten Merkmale gelöst. Vorteilhafte Weiterbildungen und praktische Ausführungsformen ergeben sich nach den Unteransprüchen.

Bei dieser erfindungsgemäßen Ausbildung der Tiefziehmaschine wird also das freie Ende des von einer Vorratsrolle mit geeigneten und bekannten Fördermitteln zugeförderten Banderolenstreifens in den Führungsschlitz des Führungsstückes bis zum Einschubschlitz der Formeintiefung eingeschoben. Die Distanz vom Einschubschlitz bis zur Einmündung des Führungsschlitzes am Führungsstück entspricht dabei der erforderlichen Länge der einzubringenden Banderole, welcher Banderolenstreifen mit denkbar einfachen Schneidelementen auf der Zuförderseite an der Einmüdnung zum Führungsschlitz abgeschnitten wird. Wesentlich ist nun, daß die abgetrennte Länge des Banderolenstreifens nicht mit Förderrollen in den Einschubschlitz bzw. die Formeintiefung eingeschoben, sondern von einem Banderolenabschnittsfördergreifer ergriffen und damit zwangsgeführt eingeschoben wird. Durch diese Zwangsführung und Zwangsergreifung des abgelenkten Banderolenabschnittes und zwar in bezug auf die Einförderung am hinteren Ende des Banderolenabschnittes wird gewährleistet, da sich der Bandgreifer bis zum Einschubschlitz bewegt, daß der gesamte zu belegende Umfang der Eintiefung abgedeckt wird. Ungenauigkeiten, wie sie bei der Einförderung mit Rollen- oder Walzenförderelementen auftreten können, sind damit vorteilhaft vermieden. Voraussetzung dafür ist, daß der abgelängte Banderolenabschnitt mit seinem oberen Randbereich aus dem Führungsstück bzw. dessen Schlitzführung herausragt. Und ferner muß die Oberfläche der Tiefziehform in der gleichen Ebene liegen wie die Oberfläche des Führungsstückes, damit sich der Bandgreifer, der ja das hintere Ende des Banderolenabschnittes erfaßt hält, auch noch über die Tiefziehform bis zum Einschubschlitz bewegen kann. Dies bedeutet, daß der Boden des Führungsschlitzes um die Höhe des herausragenden Banderolenrandes höher liegen muß als der Boden der Formeintiefung in der Tiefziehform. Im eingeschobenen Zustand des Banderolenabschnittes sitzt dieser also nicht auf dem Boden der Eintiefung auf, sondern steht mit seinem unteren Rand entsprechend höher. Dies stellt jedoch kein Problem dar, da die Tiefziehform insgesamt sowieso nach oben mit ihrer Oberfläche bis in die Ebene des durchlaufenden Folienbandes verstellt werden muß, um per Tiefziehen den betr. Becher aus der Folie in die Formeintiefung eintiefen und damit ausformen zu können. Nach vollzogener Ausformung, die gleichzeitig mit der Applizierung des eingelegten Banderolenabschnittes verbunden ist, wird die Tiefziehform insgesamt, wie bekannt, entsprechend weit nach unten verstellt, um das Folienband mit dem ausgeformten Becher aus der Eintiefung herausheben und das Folienband einen Taktschritt weiter fördern zu können. Für den Einschub des nachfolgenden Banderolenabschnittes für den Folgebecher wird nun die Tiefziehform zunächst nur so weit angehoben, daß sich wieder die vorbeschriebenen Stellungsbedingungen bzgl. der Böden von Führungsschlitzen und Eintiefung ergeben, d. h. das Anheben der Tiefziehform aus der Tiefststellung in Tiefziehstellung bzw. Arbeitsstellung erfolgt in zwei Schritten. Da es sich hierbei um eine einfache geradlinige Bewegung handelt, ist dieser Bewegungsvorgang in zwei Schritten denkbar einfach der Tiefziehform zu vermitteln.

Da erfindungsgemäß das Abschneiden des Banderolenabschnittes in entsprechender Länge schon auf der Zuförderseite zum Führungsstück erfolgt, läßt sich das Schneidelement ebenfalls denkbar einfach ausbilden, nämlich in Form eines mit Schneidschlitz versehenen Schiebers, der an der zuförderseitigen Fläche des Führungsstückes angeordnet und in einer geeigneten Schieberführung gehalten ist. Dadurch ist es möglich, den Schnitt als komplikationslosen Scherschnitt in einer Ebene auszuführen, wobei es ferner möglich ist, den Schneidschlitz beidseitig mit Schneidkanten zu versehen, was es ermöglicht, den Schieber nicht bei jedem Schnitt hin und her bewegen zu müssen, sondern für den nächsten Trennschnitt kann die Rückbewegung des Schiebers mit ausgenutzt werden.

Da in der Regel die Tiefziehform nicht nur eine Formeintiefung aufweist, sondern mehrere, ist das Führungsstück mit einer entsprechenden Anzahl von Führungsschlitzen versehen, wobei dann der Schneidschieber ebenfalls mit einer entsprechenden Anzahl von Schneidschlitzen ausgestattet ist.

Was den Banderolenabschnittsfördergreifer betrifft, so ist dieser vorteilhaft in Form einer parallel zur Oberfläche des Führungsstückes geführten flachen Schieberleiste ausgebildet, die mit gegen die Oberfläche des Führungsstückes und den Führungsschlitz gerichteten, zueinander parallelen Greiferzungen versehen ist, von denen die eine gegen die andere andrückbar ausgebildet ist. Genau wie der Schneidschieber kann also auch der Fördergreifer als Schieber und damit sehr flachbauend ausgebildet werden, der sich flach und in Distanz des überstehenden Randes des Banderolenabschnittes über dem Führungsstück erstreckt.

Bei Anordnung mehrerer Formeintiefungen in der Tiefziehform, was bei derartigen Maschinen die Regel ist, ist die Schieberleiste des Fördergreifers mit einer entsprechenden Anzahl von Greiferzugnenpaaren versehen, deren verstellbare Zungen Teile eines zur Schieberleiste verstellbaren Querschieberleiste sind.

Sowohl was den Schneidschieber als auch den Fördergreifer betrifft, handelt es sich hierbei in beiden Fällen gewissermassen um kammartige Gebilde, die in einfacher Weise von der Seite her mit einfachen, geradlinigen Bewegungen entsprechend taktweise anzutreiben sind.

Sofern die Tiefziehform mehrere Formeintiefungen aufweist, und zwar paarweise in Reihen nebeneinander, ist natürlich auf jeder Seite ein entsprechendes Führungsstück mit einer entsprechenden Anzahl von Führungsschlitzen vorzusehen.

Die erfindungsgemäße Tiefziehmaschine wird nachfolgend anhand der zeichnerischen Darstellung von Ausführungsbeispielen näher erläutert.

Es zeigt schematisch
- Fig. 1: perspektivisch das Grundprinzip des hier interessierenden Bereiches einer Tiefziehmaschine;
- Fig. 2: ebenfalls den entsprechenden Bereich gemäß Fig. 1 bei Anordnung von mehreren Eintiefungen in der Tiefziehform mit den zugehörigen Zuförderelementen für die Banderolenstreifen;
- Fig. 3: eine Draufsicht auf den hier interessierenden Bereich der Tiefziehmaschine;
- Fig. 4: eine Ansicht des hier interessierenden Bereiches in Pfeilrichtung A gemäß Fig. 3;
- Fig. 5: perspektivisch eine Ausführungsform des Banderolenabschnittsfördergreifers und
- Fig. 6: ebenfalls perspektivisch den Banderolenfördergreifer für die Erfassung mehrerer Banderolenstreifen.

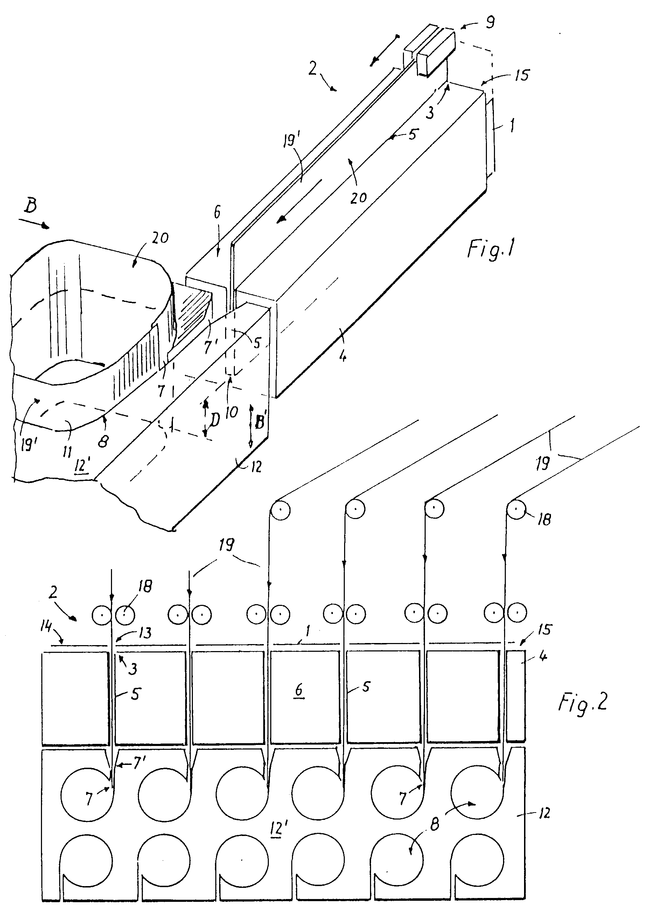

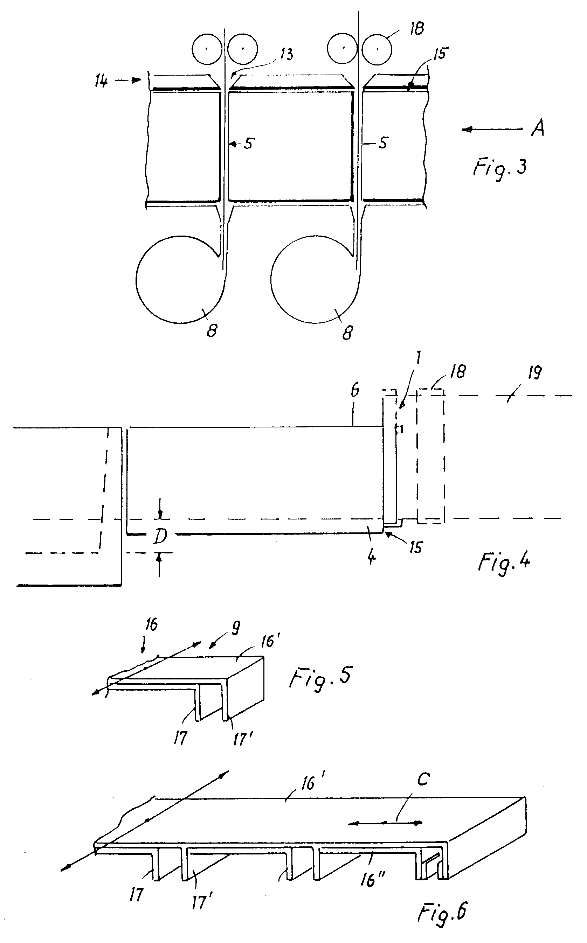

Die Tiefziehmaschine insgesamt ist nicht dargestellt und bedarf insoweit keiner ins einzelne gehender Beschreibung, da hinlänglich bekannt. Ebenfalls nicht dargestellt ist das Folienband, aus dem die Becher in den Formeintiefungen 8 der Tiefziehform 12 ausgeformt werden. Das Folienband wird in bekannter Weise mit entsprechenden Förderelementen in Pfeilrichtung B und entsprechender Distanz über die Tiefziehform 12 gefördert, die im Gestell der Tiefziehmaschine in Pfeilrichtung B′ auf- und abbewegbar angeordnet ist. Wie in Fig. 1 ersichtlich, ist jede Formeintiefung 8 mit einem Einschubschlitz 7 versehen, der das Ende einer seitlichen und tangential von der Eintiefung 8 abgehenden Schlitzführung 7′ bildet, die - wie dargestellt - einmündungsseitig trichterartig ausgebildet sein kann. Diese Schlitzführung 7′ fluchtet mit einem sich gerade im Führungsstück 4 erstreckenden Führungsschlitz 5, dem gemäß Fig. 2 mit geeigneten Fördermitteln 18 der betr. Banderolenstreifen 19 zugeführt wird. Die Tiefziehform 12 gemäß Fig.2 enthält dabei paarweise nebeneinander und in Reihe angeordnet mehrere Formeintiefungen 8, d.h. dieser Tiefzieform 12 wird eine entsprechende Anzahl von Baderolenstreifen 19 zugeführt.

Orientiert an Fig. 1 ist für die Tiefziehmaschine dieser Art nun eine Ausbildung dahingehend, wesentlich daß das Schneidelement 1 der Banderolenzufuhreinrichtung 2 an der Einmündung 3 des im Führungsstück 4 angeordneten Förderschlitzes 5 ein längs des Führungsschlitzes bis zum Einschubschlitz 7 der Formeintiefung 8 hin und her bewegbarer Banderolenabschnittsfördergreifer 9 angeordnet ist, der nach Einschub des freien Endes eines Banderolenstreifens über die ganze Länge des Führungsstückes 4 bzw. des Führungsschlitzes 5 den überstehenden Rand 19′ am zuförderseitigen Ende ergreift, nachdem dieser mittels des Schneidelementes 1 vom zugeförderten Banderolenstreifen abgeschnitten worden ist. Die Länge des Banderolenabschnittes entspricht dabei dem Umfang der Formeintiefung 8, so daß sich die freien Enden des eingeschobenen Banderolenabschnittes 20 bündig aneinanderstoßen. eine gewisse Überlappung, wie in Fig. 1 dargestellt, kann aber ebenfalls vorgesehen werden. Der Stellweg des Fördergreifers 9 erstreckt sich dabei nicht nur über die Länge des Führungsstückes 4, sondern bis zum Einschubschlitz 7, womit gewährleistet ist, daß der Banderolenabschnitt 20 den vollen Umfang der Formeintiefung 8 abdeckt. In Rücksicht darauf, daß der abgetrennte Bandabschnitt 20 vom Fördergreifer 9 zwangsergriffen werden soll, muß der Abschnitt 20 mit seinem Rand 19′ das Führungsstück 4, wie dargestellt, überragen. Da ferner der Fördergreifer 9 bis zum Eischubschlitz 7 bewegt werden muß, verlangt dies, daß die Tiefziehform zum stationär im Gestell der Tiefziehmaschine angeordneten Führungsstück4eine bestimmte Stellung einnimmt, d.h. die Oberflächen 6 des Führungsstückes und die Oberfläche 12′ der Tiefziehform müssen sich zumindest angenähert in einer Ebene erstrecken, damit der Fördergreifer 9 auch über die Tiefziehform bewegt werden kann. In Rücksicht auf diese Gegebenheiten ist der Boden 10 des Führungsschlitzes 5 in bezug auf den Boden 11 der Formeintiefung 8 in Beschickungsstellung (siehe Fig. 1) höher stehend angeordnet, d.h. nach Beschickung der Formeintiefung 8 mit dem Banderolenabschnitt 20 steht dieser ebenfalls mit seinem Rand 19′ über die Tiefziehform 12 bzw. deren Oberfläche 12′ heraus. In dieser Stellung beschickt, wird dann die Tiefziehform 12 in Pfeilrichtung B′ einfach um das Maß des Randüberstandes angehoben, wobei der überstehende Banderolenrand 19′ gegen die darüber befindliche und hier nicht dargestellte Folienbahn stößt, die den Banderolenabschnitt 20 voll in die Formeintiefung 8 bis zum Anschlag am Formeintiefungsboden 11 eindrückt. Dieses Gegenstoßen des oberen Randes 19′ gegen die sich darüber erstreckende Folienbahn ist unproblematisch, da diese Folienbahn nach oben durch den darüber befindlichen Teil der Tiefziehstation abgestützt wird. Nach vollzogenem Tiefziehen in bekannter Weise, wobei der Banderolenabschnitt 20 von außen an die tiefgezogene Becherform angelegt wird, wird die Tiefziehform 12 insgesamt mindestens um die Bechertiefe abgesenkt, damit der Folienstrang mit dem ausgeformten Becher im Takt weitergerückt werden kann, um den nächsten Becher in gleicher Weise ausformen zu können, nachdem in die Eintiefung ein neuer Banderolenabschnitt 20, wie beschrieben, eingebracht wurde. Die Rückstellung der Tiefziehform 12 in Tiefziehstellung erfolgt nun nicht in einem Schritt, sondern dieser Hubvorgang wird unterbrochen, um wieder die Zuordnungsstellung von Tiefziehform 12 zum Führungsstück 4 gemäß Fig. 1 einzustellen, bei der der nächste Banderolenabschnitt 20 eingeschoben wird.

Wie aus Fig. 3,4 ersichtlich, ist das Schneidelement 1 in Form eines mit Schneidschlitz 13 versehenen Schiebers 14 ausgebildet, der an der zuförderseitigen Fläche 15 des Führungsstückes 4 angeordnet und in geeigneter Weise geführt ist. Wie vorerwähnt, ist dabei der Schneidschlitz 13 beidseitig mit Schneidkanten versehen, so daß bei der Hin- und Herbewegung des Schiebers 14 jeweils jeder Schneidrand des Schneidschlitzes 13 wirksam werden kann. Für den Einschub des betr. Banderolenabschnittes 20 muß natürlich der Schneidschlitz 13 auf Mitte Führungsschlitz 5 gestellt sein. Bei der Anordnung mehrerer Formeintiefungen 8, wie dargestellt, ist in der Tiefziehform 12 das Führungsstück 4 mit einer entsprechenden Anzahl von Führungsschlitzen 5 und der Schieber 14 mit einer entsprechenden Anzahl von Schneidschlitzen 13 versehen. Gleiches gilt auch für den Banderolenabschnittsfördergreifer 9. Auch dieser Banderolenabschnittsfördergreifer 9 ist vorteilhaft in Form einer parallel zur Oberfläche 6 des Führungsstückes 4 geführten Schieberleiste 16 ausgebildet und mit zueinander parallelen Greiferzungen 17, 17′ versehen, von denen eine gegen die andere andrückbar ausgebildet ist. Bei der Anordnung mehrerer Formeintiefungen 8 ist die Schieberleiste 16 mit einer entsprechenden Anzahl von Greiferzungen 17, 17′ versehen, wobei natürlich die untere Schieberleiste 16˝ entsprechende Durchgriffe (nicht dargestellt) aufweisen muß, damit die Zungen 17′ der oberen Querschieberleiste 16′ die untere Schieberleiste durchgreifen können. Wie dargestellt, können dabei die Greiferzungen 17, 17′ mit entsprechenden Haftbelägen versehen sein. Wie mit Pfeilen angedeutet, wird dabei die Querschieberleiste 16′ in Pfeilrichtung C taktweise zur anderen, darunter befindlichen Leiste bewegt, um die Greiferzungen 17, 17′ schließen bzw. öffnen zu können, wobei die gesamte Schieberleiste 16 über das Führungsstück 4 in Richtung des Führungsschlitzes 5 bewegt wird. Die Antriebsmittel sowohl für das Schneidelement 1 als auch den Banderolenabschnittsfördergreifer sind nicht dargestellt, da hierfür ohne weiteres geeignete und einfache Antriebselemente verfügbar sind, zumal es sich um einfache geradlinige Bewegungen handelt. Da der obere Rand 19′des einzuführenden Banderolenstreifens 2o über das Führungsstück 4 herausragt, muß das Schneidelement 1, wie in Fig.1,4 gestrichelt angedeutet, so ausgebildet sein, daß beim Abschneiden des Banderolenabschnittes 2o vom zugeführten Banderolenstreifen 19 dieser obere Rand 19′mit erfaßt wird, d.h., das Schneidelement 1 ist entweder scherenartig ausgebildet oder bei Ausbildung in Form eines Schneidschiebers, wie dargestellt, muß eine die ganze Streifenbreite erfassende Gegenschneidkante vorhanden sein.

## Patentansprüche

1. Tiefziehmaschine zum Herstellen von becherartigen Behältern aus thermoplastischer Folie mit Einrichtungen zum Einbringen eines banderolenförmigen Streifens in die Tiefziehform, bestehend aus einer in bezug auf die Durchlaufebene des Folienbandes auf- und abbeweglichen Tiefziehform mit mindestens einer Formeintiefung, die einen seitlichen Banderoleneinschubschlitz aufweist, dem fluchtend der Führungsschlitz einer mit Förder- und Schneidelementen versehenen Banderolenzufuhreinrichtung zugeordnet ist,
**dadurch gekennzeichnet,**
daß das Schneidelement (1) der Banderolenzufuhreinrichtung (2) an der Einmündung (3) des in einem Führungsstück (4) angeordneten Führungsschlitzes (5) und über dem Führungsschlitz (5) ein längs des Führungsschlitzes bis zum Einschubschlitz (7) der Formeintiefung (8) hin und her bewegbarer Banderolenabschnittsfördergreifer (9) angeordnet ist und daß der Boden (10) des Führungsschlitzes (5) in bezug auf den Boden (11) der Formeintiefung in Beschickungsstellung höher stehend angeordnet und die Tiefziehform (12) aus ihrer Tiefststellung in zwei Schritten in Arbeitsstellung bringbar ist, wobei die Hubhöhe des zweiten Schrittes der Höhendifferenz der beiden Böden (1o, 11) entspricht.

2. Tiefziehmaschine nach Anspruch 1,
**dadurch gekennzeichnet,**
daß das Schneidelement (1) in Form eines mit Schneidschlitz (13) versehenen Schiebers (14) ausgebildet und der Schieber (14) an der zuförderseitigen Fläche (15) des Führungsstückes (4) angeordnet ist.

3. Tiefziehmaschine nach Anspruch 2,
**dadurch gekennzeichnet,**
daß bei Anordnung mehrerer Formeintiefungen (8) in der Tiefziehform (12) das Führungsstück (4) mit einer entsprechenden Anzahl von Führungsschlitzen (5) und der Schieber (14) mit einer entsprechenden Anzahl von Schneidschlitzen (13) versehen ist.

4. Tiefziehmaschine nach Anspruch 1,
**dadurch gekennzeichnet,**
daß der Banderolenabschnittsfördergreifer (9) in Form einer parallel zur Oberfläche (15) des Führungsstückes (4) geführte Schieberleiste (16) mit gegen die Oberfläche des Führungsstückes (4) und den Führungsschlitz (5) gerichteten, zueinander parallelen Greiferzungen (17,17′) versehen ist, von denen die eine gegen die andere andrückbar ausgebildet ist.

5. Tiefziehmaschine nach Anspruch 4,
**dadurch gekennzeichnet,**
daß bei Anordnung mehrerer Formeintiefungen (8) in der Tiefziehform (12) die Schieberleiste (16) mit einer entsprechenden Anzahl von Paaren der Greiferzungen (17, 17′) versehen ist, deren verstellbare Zungen (17′) Teile einer zur Schieberleiste (16) verstellbaren Querschieberleiste (16′) sind.

## Claims

1. A deep-drawing machine for the manufacture of cup-shaped receptacles from a thermoplastic foil, including means for introducing a band-type strip into the deep-drawing mould, comprising a deep-drawing mould movable up and down relative to the passage plane of the foil band, with the deep-drawing mould having at least one mould depression provided with a lateral band insertion slot to which is associated, in registry, the guide slot of a band feeding means provided with conveying and cutting elements,
characterized in that the cutting element (1) of the band feeding means (2) is arranged on the mouth (3) of the guide slot (5) provided in a guide member (4), and that a band section conveying gripper (9) is provided above the guide slot (5) reciprocating along the guide slot down to the insertion slot (7) of the mould depression (8), and that the bottom (10) of the guide slot (5) is arranged to stand higher than the bottom (11) of the mould depression in the loading position, and that the deep-drawing mould (12), in two steps, can be placed from its deepest position, into the working position, with the lift of the second step corresponding to the height difference of the two bottoms (10,11).

2. A deep-drawing machine according to claim 1,
characterized in that the cutting element (1) is in the form of a slide (14) provided with a cutting slot (13) and that the slide (14) is located on the feed-in-sided surface (15) of the guide member (4).

3. A deep-drawing machine according to claim 2,
characterized in that the guide member (4) - if a plurality of mould depressions (8) is provided in the deep-drawing mould - includes a corresponding number of guide slots (5) and the slide (14) is provided with a corresponding number of cutting slots (13).

4. A deep-drawing machine according to claim 1,
characterized in that the band section conveying gripper (9) in the form of a slide bar (16) guided in parallel to the surface (15) of the guide member (4) is provided with gripping tongues (17,17') directed against the surface of the guide member (4) and the guide slot (5) and extending in parallel with respect to one another, with one of the said tongues being so formed as to contact the other of said tongues.

5. A deep-drawing machine according to claim 4,
characterized in that the slide bar (16) - if a plurality of mould depressions (8) is provided in the deep-drawing mould (12) - is provided with a corresponding number of pairs of gripping tongues (17,17'), the adjustable tongues (17') of which form parts of a transverse slide bar (16') adjustable to the slide bar (16).

## Revendications

1. Machine d'emboutissage profond pour fabriquer des récipients du type godet à partir d'une feuille thermoplastique, comprenant des dispositifs pour introduire une bande en forme de ruban dans la matrice d'emboutissage, constituée d'une matrice d'emboutissage qui peut monter et descendre par rapport au plan de défilement du ruban de feuille et qui comporte au moins une cavité de matrice pourvue d'une fente latérale d'introduction de ruban à laquelle correspond, dans son alignement, la fente de guidage d'un dispositif d'alimentation en ruban muni d'éléments d'amenée et de coupe, caractérisée en ce que l'élément de coupe (1) du dispositif (2) d'alimentation en ruban est disposé à l'entrée (3) de la fente de guidage (5) ménagée dans une pièce de guidage (4) et, au-dessus de la fente de guidage (5), est disposé un preneur (9) d'amenée du tronçon de ruban, ledit preneur pouvant effectuer un mouvement de vaet-vient le long de la fente de guidage jusqu'à la fente d'introduction (7) de la cavité de matrice (8), et en ce que, en position d'alimentation, le fond (10) de la fente de guidage (5) est disposé plus haut que le fond (11) de la cavité de matrice, et la matrice d'emboutissage (12) peut être amenée de sa position basse extrême à la position de travail en deux étapes, la hauteur de course de la seconde étape correspondant à la différence de hauteur entre les deux fonds (10, 11).

2. Machine d'emboutissage profond selon la revendication 1, caractérisée en ce que l'élément de coupe (1) est conçu sous la forme d'un coulisseau (14) pourvu d'une fente de coupe (13), et le coulisseau (14) est disposé contre la surface (15) de la pièce de guidage (4) située côté alimentation.

3. Machine d'emboutissage profond selon la revendication 2, caractérisée en ce que, en présence de plusieurs cavités de matrices (8) dans la matrice d'emboutissage (12), la pièce de guidage (4) est pourvue d'une pluralité correspondante de fentes de guidage (5), et le coulisseau (14) est pourvu d'une pluralité correspondante de fentes de coupe (13).

4. Machine d'emboutissage profond selon la revendication 1, caractérisée en ce que le preneur (9) d'amenée du tronçon de ruban, conçu sous la forme d'une barrette coulissante (16) guidée parallèlement à la surface (15) de la pièce de guidage (4), est muni de languettes preneuses (17, 17') qui sont tournées vers la surface de la pièce de guidage (4) et de la fente de guidage (5) et sont parallèles l'une à l'autre, et dont l'une peut être appliquée contre l'autre.

5. Machine d'emboutissage profond selon la revendication 4, caractérisée en ce que, en présence de plusieurs cavités de matrices (8) dans la matrice d'emboutissage (12), la barrette coulissante (16) est munie d'une pluralité correspondante de paires de languettes preneuses (17, 17') dont les languettes mobiles (17') font partie d'une barrette coulissante transversale (16') mobile par rapport à la barrette coulissante (16).
